# EUROPEAN PATENT SPECIFICATION

(11) **EP 3 424 331 B1**
(45) Date of publication and mention of the grant of the patent: **30.09.2020**
(21) Application number: 17850077.3
(22) Date of filing: 04.07.2017
(51) Int. Cl.: A23L 13/20, A23L 33/00, A22C 17/08, A22C 17/00

(54) **METHOD FOR WASHING AND DETOXIFYING FRESH ANIMAL LIVER AND PERFORMING CELL TISSUE PRESERVATION**
VERFAHREN ZUM WASCHEN UND ENTGIFTEN VON FRISCHER TIERLEBER UND DURCHFÜHRUNG VON ZELLGEWEBEKONSERVIERUNG
PROCÉDÉ DE NETTOYAGE ET DE DÉTOXIFICATION DE FOIE FRAIS D'ANIMAL, ET DE CONSERVATION DE TISSU CELLULAIRE

(30) Priority: 10.04.2017 CN 201710228662
(43) Date of publication of application: 09.01.2019
(73) Proprietor: Qingdao University, Qingdao, Shandong 266000 (CN)
(72) Inventor: DONG, Qian, Qingdao Shandong 266000 (CN); YU, Qiyue, Qingdao Shandong 266000 (CN); WEI, Bin, Qingdao Shandong 266000 (CN); XIA, Nan, Qingdao Shandong 266000 (CN); DONG, Bingzi, Qingdao Shandong 266000 (CN); ZHU, Chengzhan, Qingdao Shandong 266000 (CN); ZHOU, Xianjun, Qingdao Shandong 266000 (CN)
(74) Representative: J A Kemp LLP
(86) International application number: PCT/CN2017/091684
(87) International publication number: WO 2018/049874

(56) References cited:
- WO-A1-2015/138832
- CN-A- 105 219 701
- CN-U- 202 050 840
- CN-U- 202 050 840
- CN-U- 202 958 590
- US-A1- 2010 092 939
- H Tolboom: "Normothermic machine perfusion for donor liver preservation", , 30 August 2012 (2012-08-30), XP055568659, ISBN: 978-94-6191-384-5 Retrieved from the Internet: URL:https://dspace.library.uu.nl/bitstream /handle/1874/254435/tolboom.pdf?sequence=3 [retrieved on 2019-03-13]
- XU, BOLIANG ET AL: "Points for Attention in Eating Animal Livers", Food Contamination and Food Safety, 30 September 1992 (1992-09-30), pages 216-217, XP009510351,
- FAN, ZHENJIANG et al.: "Meat Product Processing Technology", Food Processing Technology, 28 February 2013 (2013-02-28), page 25, XP009510350, ISBN: 9787504663108

## Description

### TECHNICAL FIELD

The present application relates to the field of food processing, and in particular to a method for cleaning, detoxifying and cells and tissues preservation of a fresh animal liver.

### BACKGROUND OF THE RELATED ART

The animal liver, e.g. pork liver, which is more than 10 times greater in nutrient content than that of pork, is highly nutritional. The content of vitamin A in the animal liver is greater than that in other food products such as milk, eggs, meats and fish. Vitamin A can protect eyes, maintain normal eyesight, prevent dry eyes and eye fatigue, help the bones development of infants, promote the restoration of epidermal tissues, and have therapeutic effect on night blindness. In addition, the animal liver also contains vitamin B2 which can maintain healthy complexion and normal functions of growth and reproduction, enhance human body's immune reaction, and have functions of anti-oxidation and anti-aging. The animal liver further contains rich proteins and animal iron, which is a kind of preferred nutritious food product for children with nutritional anemia. However, the animal liver is also the largest toxicants transfer station and the detoxifying organ within animal body. Most of toxicants in the blood, even toxicants and pathogens combined with proteins, can enter into the liver. In today's increasingly serious pollution of the environment, the content of toxins and pathogens in the animal liver is many times higher than that in muscle, and a large number of macrophages and immune cells are present in hepatic sinusoids of the liver, which phagocytose toxins and pathogens in the liver. These macrophages and immune cells containing a large number of toxins and pathogens aggregate in tens of thousands of hepatic sinusoids in the liver. If these macrophages and immune cells containing a large number of toxins and pathogens are not removed, it is impossible to achieve complete detoxification of liver food products.

In the traditional methods of detoxifying the animal liver, the liver is firstly cut into pieces, and these pieces are washed with tap water for 10 minutes and then soaked in water for 30 minutes. However, due to the effect that the blood would be rapidly coagulated after the liver is separated from the animal body and macrophages and other immune cells containing a large number of toxins in the blood may be aggregated in tens of thousands of hepatic sinusoids in the liver with blood coagulation, only a small amount of toxins and harmful substances contained in the liver may be removed, and most of toxins and harmful substances may still remain in the hepatic sinusoids and micrangium in the liver, even if the liver is cut into pieces which are then washed and soaked. Therefore, the traditional methods of detoxifying the animal liver cannot achieve complete detoxification.

"Normothermic machine perfusion for donor liver preservation" by Herman Tolboom focuses on the exploration of normothermic machine perfusion as a method for the preservation and resuscitation of ischemic rat livers.

CN202050840U discloses a memory device of liver perfusion.

### SUMMARY OF THE INVENTION

According to the above deficiencies, an object of the present application is to provide a method of obtaining a liver food product. The method is for cleaning, detoxifying and cells and tissues preservation of fresh animal liver. It can be guaranteed that the cells and tissues of the liver are not damaged as far as possible, and blood, toxins and harmful substances in the liver can be eliminated through this method.

In order to achieve the above object, the technical scheme of the present application is to provide a method of obtaining a liver food product, the method being for cleaning, detoxifying and cells and tissues preservation of a fresh animal liver, comprising the following steps:
S1: taking out a whole fresh liver from an animal body quickly and removing gallbladder, with blood vessels in first porta hepatis of the liver being retained when taking out the liver;
S2: spreading the liver taken out gently on a clean plane, dissecting the first porta hepatis of the liver quickly and determining portal vein, biliary tract, hepatic artery and upper and lower ends of the inferior vena cava, and then inserting disinfected medical catheters into blood vessels of the portal vein, the biliary tract and blood vessels of the hepatic artery, respectively;
S3: perfusing a perfusate of 30°C-35°C into the catheters in the portal vein, the hepatic artery and the biliary tract, the perfusate fully flows into a hepatic sinusoid system through the portal vein and the hepatic artery and fully flows into a biliary tract system through the biliary tract;
S4: perfusing the perfusate continuously, macrophages and other immune cells containing a large number of toxins, blood and harmful substances in the liver are eliminated from the upper and lower ends of the inferior vena cava continuously and bile is flushed out from the biliary tract system;
S5: perfusing continuously, until the fresh liver becomes white from blood red, and (a) then taking down the catheters from the portal vein, the biliary tract and the hepatic artery of the liver to complete the vascular perfusion cleaning, detoxification and cells and tissues preservation of the liver or (b) the vascular perfusion cleaning, detoxification and cells and tissues preservation of the liver are completed when the fresh liver becomes white from blood red.

In step S3, the perfusate is a solution of water and salt, a ratio of the salt to the water is 8.5-9 grams of the salt per thousand milliliters of the water.

Preferably, a length of the blood vessels retained in the first porta hepatis is 3 cm to 4 cm.

Preferably, in step S1, ensuring integrity of surface capsula of the liver taken out.

Preferably, in step S2, fixing joints where the blood vessels of the portal vein, the biliary tract and the blood vessels of the hepatic artery connect with the catheters.

Preferably, in step S3, a perfusion speed of the perfusate is 20-30 ml/s.

The beneficial effects of the present application are the followings.
1. In the present application, by perfusing the blood vessels and the hepatic sinusoids in the liver with the perfusate of a temperature close to the animal's body temperature quickly after the animal liver being separated, macrophages and other immune cells containing a large number of toxins, blood and harmful substances in the liver are eliminated continually from the upper and lower ends of the inferior vena cava, perfusion, cleaning and detoxification of the liver are realized, which provides a healthy safeguard for the consumption of the liver.
2. During the perfusion of the liver, bitter bile is continually eliminated through the biliary tract so as to remove bitterness of the liver food product.
3. It can be guaranteed that the cells and tissues of the liver are not damaged as far as possible, and the animal liver finally obtained can still be kept fresh, since the process of the present application is quickly and the temperature of the perfusate is close to the animal's body temperature.

### BRIEF DESCRIPTION OF THE DRAWINGS

Fig. 1 is a micrograph of the morphology of liver tissues after being vascular perfusion cleaned according to Embodiment 1 (4x objective);
Fig. 2 is a micrograph of the morphology of liver tissues without vascular perfusion cleaning (4x objective);
Fig. 3 is a micrograph of the morphology of liver tissues after being vascular perfusion cleaned according to Embodiment 1 (10x objective);
Fig. 4 is a micrograph of the morphology of liver tissues without vascular perfusion cleaning (10x objective);
Fig. 5 is a micrograph of the morphology of liver tissues after being vascular perfusion cleaned according to Embodiment 1 (20x objective);
Fig. 6 is a micrograph of the morphology of liver tissues without vascular perfusion cleaning (20x objective);
Fig. 7 is a micrograph of the morphology of liver tissues after being vascular perfusion cleaned according to Embodiment 1 (40x objective);
Fig. 8 is a micrograph of the morphology of liver tissues without vascular perfusion cleaning (40x objective).

### DETAILED DESCRIPTION OF THE INVENTION

The present application will be further described below in conjunction with specific embodiments.

The present application relates to a method for cleaning, detoxifying and cells and tissues preservation of a fresh animal liver, comprising the following steps:
S1: Taking out a whole fresh liver quickly from an animal body, removing gallbladder, with blood vessels in first porta hepatis of the liver being retained when taking out the liver. The propose of retaining the blood vessels in the first porta hepatis of the liver is to make it easier to determine the blood vessels during the subsequent dissection and perfusion and insert catheters into the blood vessels quickly.
S2: Spreading the liver taken out gently on a clean plane, dissecting the first porta hepatis of the liver quickly and determining portal vein, biliary tract, hepatic artery and upper and lower ends of the inferior vena cava, and then inserting disinfected medical catheters into blood vessels of the portal vein, the biliary tract and blood vessels of the hepatic artery, respectively. Wherein, the upper and lower ends of the inferior vena cava are not limited to upper and lower ends and may also be represented as two ends of the inferior vena cava.
S3: Perfusing a perfusate of 30°C to 35°C into the catheters in the portal vein, the hepatic artery and the biliary tract, the perfusate fully flows into a hepatic sinusoid system through the portal vein and the hepatic artery and fully flows into a biliary tract system through the biliary tract. If the temperature of the perfusate is too low, the blood in the hepatic sinusoid would coagulate quickly, which is unfavourable for the perfusion process. If the temperature of the perfusate is too high, it is easy to destroy cells and tissues of the liver. Therefore, the temperature of the perfusate is selected as a temperature which is close to the animal's body temperature for perfusion. It can be understood that the temperature of the perfusate can be rationally selected within the above range, for example, it can be 32°C, 33°C, 34°C, etc.
   The processes of slaughtering animals, taking out the liver and the perfusion should be performed quickly. If it is failed to perform the perfusion within a very short period of time, the blood in the hepatic sinusoid of the liver would coagulate quickly, and the internal liver tissues and immune cell structure would be autolyzed and destroyed. Therefore, in order to ensure the freshness of the liver, the perfusion must be performed within a very short period of time to keep the liver tissue structure from being destroyed. During the actual operation, it takes within ca.10 minutes.
S4: Perfusing the perfusate continuously, macrophages and other immune cells containing a large number of toxins, blood and harmful substances in the liver are eliminated from the upper and lower ends of the inferior vena cava continuously and bile is flushed out from the biliary tract system. By perfusing and washing the hepatic sinusoid system and biliary tract system of the liver respectively, macrophages and other immune cells containing a large number of toxins, blood and harmful substances, as well as bile are removed. This guarantees the liver food product safety, and removes bitterness of the liver food product.
S5: Perfusing continuously, until the fresh liver becomes white from blood red, and then taking down the catheters from the portal vein, the biliary tract and the hepatic artery of the liver to complete the vascular perfusion cleaning, detoxification and cells and tissues preservation of the liver.

As a preferred implementation, a length of the blood vessels retained in the first porta hepatis is 3 cm to 4 cm. This aims at a better insertion of the catheters into the blood vessels and is helpful for fixation of the blood vessels with the catheters. If the blood vessels retained are too short, firstly, it is time-consuming to find them; secondly, it is not conducive to fix them with the catheters. Therefore, the blood vessels retained should be a little bit long, for example, the length of the above-mentioned blood vessels retained can be 3.2 cm, 3.4 cm, 3.6 cm, 3.8 cm, etc.

As a preferred implementation, in step S1, ensuring integrity of surface capsula of the liver taken out. If the surface capsula of the liver is broken during the operation, the perfusate used in the sequent perfusion would flow out from the broken surface capsula of the liver, which may cause incomplete perfusion cleaning as well as incomplete detoxification to the vessels of the liver.

As a preferred implementation, in step S2, fixing joints where the blood vessels of the portal vein, the biliary tract, the blood vessels of the hepatic artery connect with the catheters, in order to prevent the perfusate from flowing out from gaps between the blood vessels and the catheters, which causes incomplete perfusion cleaning and detoxification. The above fixation can be achieved by selecting conventional tools such as ropes and clamps etc. In addition, other methods for fixing the blood vessels with catheters can be used as alternates, as long as they conform to the food hygiene standards.

As a preferred implementation, in step 3, a perfusion speed of the perfusate is 20-30 ml/s. Such perfusion speed can enhance the efficiency and effectiveness of the perfusion and of the elimination of the macrophages and other immune cells containing a large number of toxins, the blood and the harmful substances, and can protect the liver cells and tissues from being destroyed to a maximum extent. It can be understood that the perfusion speed can be rationally selected within the above range as required, for example, it can be 22 ml/s, 24 ml/s, 25 ml/s, 26 ml/s, 28 ml/s, etc.

In step S3, the perfusate is a solution of water and salt, a ratio of the salt to the water is 8.5 to 9 grams of the salt per 1000 milliliters of the water. It can be understood that the concentration of the perfusate can be rationally selected within the above range, for example, 8.6g, 8.7g, 8.8g, 8.9g, etc of the salt per 1000 milliliters of the water.

As a preferred implementation, in step S3, the perfusate is a solution of water and salt, i.e. an aqueous solution of sodium chloride, the ratio of the sodium chloride to the water is 8.5-9 grams of the sodium chloride per 1000 milliliters of the water. It can be understood that the concentration of the perfusate can be rationally selected within the above range, for example, 8.6g, 8.7g, 8.8g, 8.9g, etc of the sodium chloride per 1000 milliliters of the water.

As a preferred implementation, in step S5, the catheters may also be remained and then carry out the next step directly, for example, the liver is perfused with seasoning directly through the catheters and then made into a liver product. That is, the step S5 can be replaced by: the vascular perfusion cleaning, detoxification and cells and tissues preservation of the liver are completed when the fresh liver becomes white from blood red.

As a preferred implementation, the animal liver used in the present application comprises, but is not limited to, pork liver, beef liver and lamb liver.

In the blood circulation system of the liver, the portal vein is the functional vessel of the liver, which delivers substances from the stomach and intestine into the liver. The portal vein is divided into left and right branches at the porta hepatis, which run to left and right lobes of the liver, respectively, and are then repeatedly branched between the hepatic lobules to form interlobular veins. Interlobular veins are branched into small branches, described as terminal portal venules, which run between two adjacent hepatic lobules. Branches of the terminal portal venules are connected to the hepatic sinusoids to deliver the portal vein blood into the hepatic lobules. In addition, the hepatic arterial blood is rich in oxygen and the hepatic artery is the nutritional vessel of the liver. Branches of the hepatic artery, which are accompanied with branches of the portal vein, are branched into interlobular arteries, and the interlobular arteries are then branched into terminal hepatic arterioles that finally run into the hepatic sinusoids. Interlobular arteries are also branched into small branches to supply the capsula, mesenchyme and bile ducts. Therefore, the hepatic sinusoids contain mixed blood from the portal veins and the hepatic arteries. The blood in the hepatic sinusoids flows from the periphery of the lobules to the center and enters into central veins. There is no smooth muscle outside the endothelium of the central veins, and instead, only a few of connective tissues are present therein. Several central veins merge into sublobular veins. The sublobular veins run in interlobular connective tissues separately and have a large diameter and a large thickness. The sublobular veins further merge into 2 or 3 hepatic veins, which then run into the inferior vena cava after exit from the liver.

It can be known according to the physiological anatomic structure of the liver that, by perfusing the perfusate through the portal vein, biliary tract and hepatic artery of the liver and by eliminating macrophages and other immune cells containing a large number of toxins, blood and harmful substances in the liver through the upper and lower ends of the inferior vena cava, toxins, blood and harmful substances in all parts of the liver can be eliminated completely.

The animal liver used in the present application comprises, but is not limited to, pork liver, beef liver and lamb liver.

The present application will be further described below by specific embodiments.

### Embodiment 1

A method for cleaning, detoxifying and cells and tissues preservation of a fresh animal liver, comprising the following steps:
S1: Taking out the whole fresh pork liver quickly from a pig body and removing gallbladder, with blood vessels in first porta hepatis of the pork liver being retained when taking out the pork liver; retaining the length of the blood vessels in the first porta hepatis with 3 cm, and ensuring the integrity of surface capsula of the pork liver taken out.
S2: Spreading the pork liver taken out gently on a clean plane, dissecting the first porta hepatis of the pork liver quickly and determining the portal vein, biliary tract, hepatic artery and the upper and lower ends of the inferior vena cava, inserting disinfected medical catheters into blood vessels of the portal vein, the biliary tract and blood vessels of the hepatic artery, respectively; and fixing the joints where the blood vessels of the portal vein, the biliary tract, the blood vessels of the hepatic artery connect with the catheters.
S3: Perfusing a perfusate of 30°C into the catheters in the portal vein, the hepatic artery and the biliary tract, the perfusate fully flows into a hepatic sinusoid system through the portal vein and the hepatic artery and fully flows into a biliary tract system through the biliary tract. The perfusion speed of the perfusate was 25 ml/s. The perfusate was a solution of water and salt, the ratio of the salt to the water was 9 grams of the salt per 1000 milliliters of the water.
S4: Perfusing the perfusate continuously, macrophages and other immune cells containing a large number of toxins, blood and harmful substances in the liver were eliminated from the upper and lower ends of the inferior vena cava continuously, and bile was flushed out from the biliary tract system.
S5: Perfusing continuously, until the fresh pork liver became white from blood red, and then taking down the catheters from the portal vein, the biliary tract and the hepatic artery of the pork liver to complete the vascular perfusion cleaning, detoxification and cells and tissues preservation of the pork live.

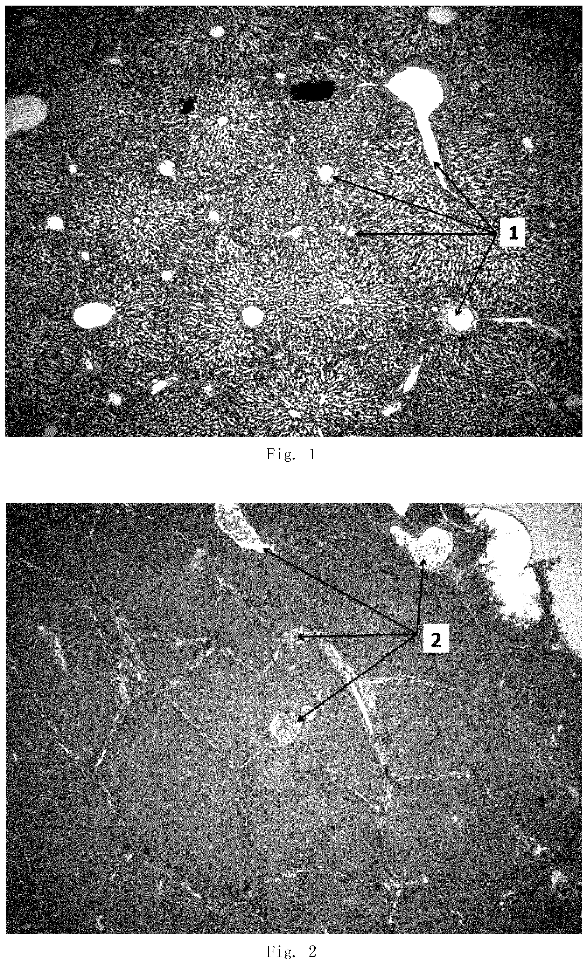

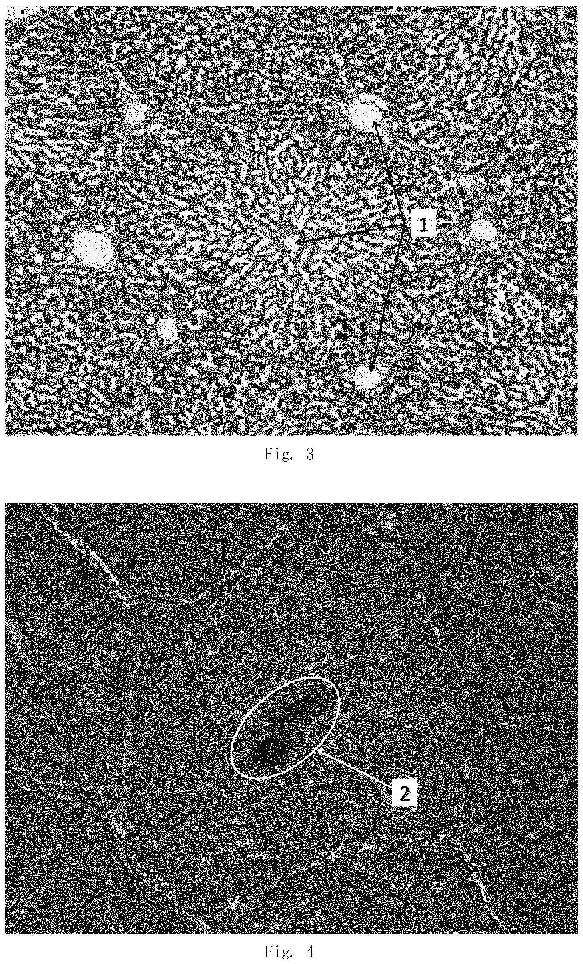

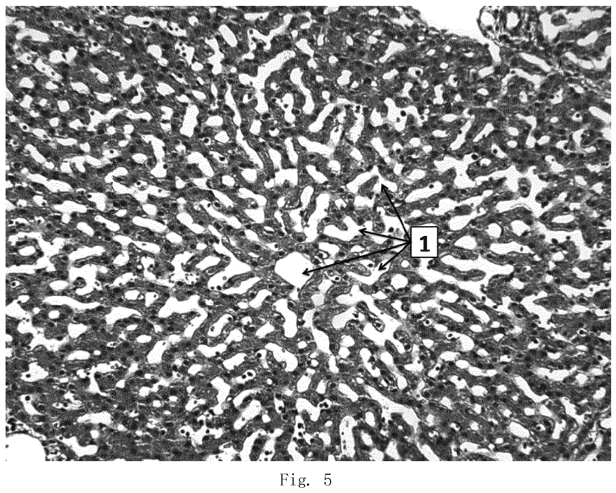

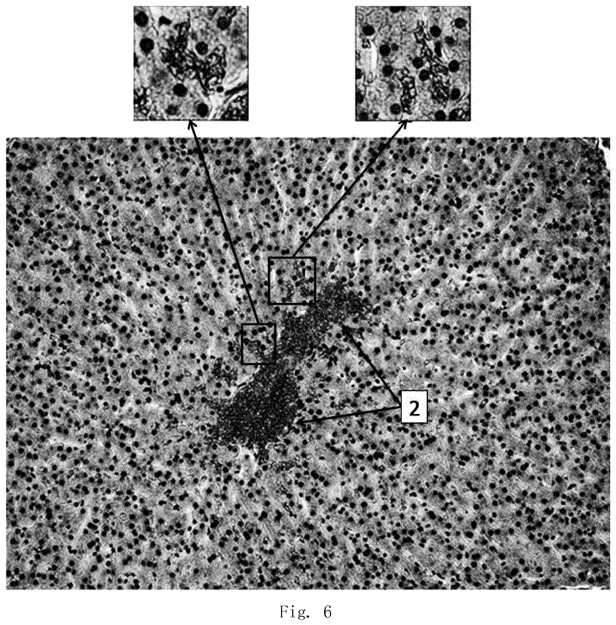

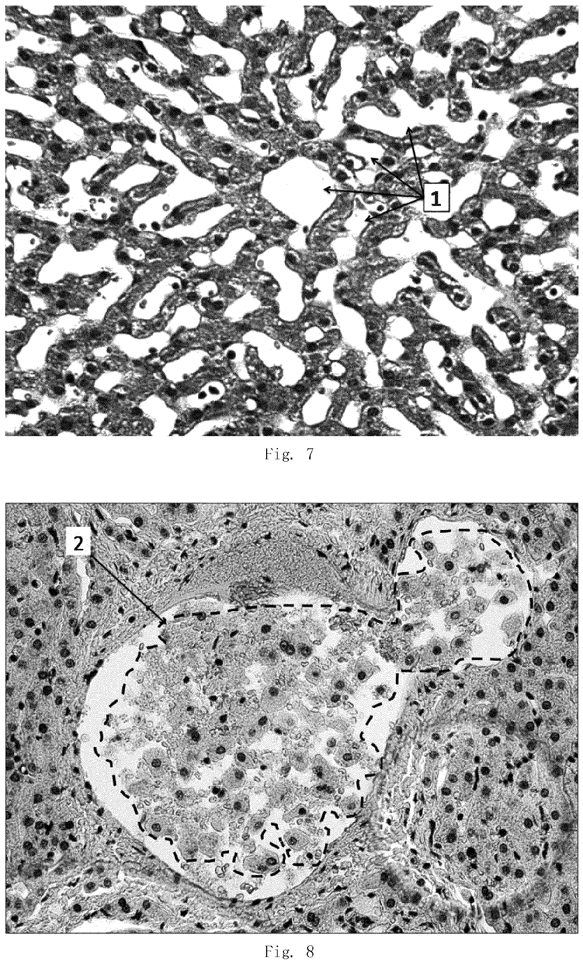

Figs. 1 to 8 are micrographs of pork liver tissues of this embodiment after being vascular perfusion cleaned at different magnifications and micrographs of liver tissues without any processing at corresponding magnifications. Wherein, in the morphology of liver tissues after being cleaned by the method of this embodiment, 1 represents a blank area left after eliminating original macrophages and immune cells phagocytosing toxins and containing pathogens by vascular perfusion, and 2 represents macrophages and immune cells phagocytosing toxins and containing pathogens contained in liver tissues without processing. It should be noted that 1 and 2 in the drawings are exemplarily marked, not exhaustive.

It can be known from comparison and analysis of the above micrographs that, in the animal liver obtained by cleaning and detoxifying by the method of this embodiment, toxic tissue cells such as macrophages and immune cells phagocytosing toxins and containing pathogens are basically not found even if at high magnifications. It means that macrophages and immune cells phagocytosing toxins and containing pathogens contained in the liver tissues are removed basically, and the cleaning and detoxification of liver tissues are completed. In addition, the characteristics of liver cells are obvious, almost not destroyed.

### Embodiment 2

A method for cleaning, detoxifying and cells and tissues preservation of a fresh animal liver, comprising the following steps:
S1: Taking out the whole fresh beef liver quickly from a cattle body and removing gallbladder, with vessels in first porta hepatis of the liver being retained when taking out the beef liver; retaining the length of the blood vessels in the first porta hepatis with 3 cm, and ensuring the integrity of epidermis of the beef liver taken out.
S2: Spreading the liver taken out gently on a clean plane, dissecting the first porta hepatis of the liver quickly and determining the portal vein, biliary tract, hepatic artery and the upper and lower ends of the inferior vena cava, inserting disinfected medical catheters into blood vessels of the portal vein, the biliary tract and blood vessels of the hepatic artery, respectively; fixing the joints where the blood vessels of the portal vein, the biliary tract, the blood vessels of the hepatic artery connect with the catheters.
S3: Perfusing a perfusate of 35°C into the catheters in the portal vein, the hepatic artery and the biliary tract, the perfusate fully flows into a hepatic sinusoid system through the portal vein and the hepatic artery and fully flows into a biliary tract system through the biliary tract. The perfusion speed of the perfusate was 20 ml/s. The perfusate was a solution of water and salt, the ratio of the salt to the water was 8.5 grams of the salt per 1000 milliliters of the water.
S4: Perfusing the perfusate continuously, macrophages and other immune cells containing a large number of toxins, blood and harmful substances in the liver were eliminated from the upper and lower ends of the inferior vena cava continuously and bile was flushed out from the biliary tract system.
S5: Perfusing continuously, until the fresh liver became white from blood red, and then taking down the catheters from the portal vein, the biliary tract and the hepatic artery of the liver to complete the vascular the perfusion cleaning, detoxification and cells and tissues preservation of the liver.

The micrograph of the morphology of the test result in this embodiment is similar to that of Figs. 1, 3, 5 and 7 in Embodiment 1. Here will be not described in details.

### Embodiment 3

A method for cleaning, detoxifying and cells and tissues preservation of a fresh animal liver, comprising the following steps:
S1: Taking out the whole fresh lamb liver quickly from a lamb body and removing gallbladder, with blood vessels in first porta hepatis of the liver being retained when taking out the liver; retaining the length of the blood vessels in the first porta hepatis with 4 cm, and ensuring the integrity of surface capsula of the liver taken out.
S2: Spreading the liver taken out gently on a clean plane, dissecting the first porta hepatis of the liver quickly and determining the portal vein, biliary tract, hepatic artery and the upper and lower ends of the inferior vena cava, inserting disinfected medical catheters into blood vessels of the portal vein, the biliary tract and blood vessels of the hepatic artery, respectively; and fixing the joints where the blood vessels of the portal vein, the biliary tract, the blood vessels of the hepatic artery connect with the catheters.
S3: Perfusing a perfusate of 33°C into the catheters in the portal vein, the hepatic artery and the biliary tract, the perfusate fully flows into a hepatic sinusoid system through the portal vein and the hepatic artery and fully flows into a biliary tract system through the biliary tract. The perfusion speed of the perfusate was 30 ml/s. The perfusate was a solution of water and salt, the ratio of the salt to the water was 8.7 grams of the salt per 1000 milliliters of the water.
S4: Perfusing the perfusate continuously, macrophages and other immune cells containing a large number of toxins, blood and harmful substances in the liver were eliminated from the upper and lower ends of the inferior vena cava continuously, and bile was flushed out from the biliary tract system.
S5: Perfusing continuously, until the fresh liver became white from blood red, and then taking down the catheters from the portal vein, the biliary tract and the hepatic artery of the liver to complete the vascular perfusion cleaning, detoxification and cells and tissues preservation of the liver.

The micrograph of the morphology of the test result in this Embodiment is similar to that of Figs. 1, 3, 5 and 7 in Embodiment 1. Here will be not described in details.

The animal liver treated by the method of the present application has no toxins, and is safer and more delicious to serve and can provide the corresponding nutrients for human body; besides, the liver tissue is preserved intact and looks good when served.

## Claims

1. A method of obtaining a liver food product, the method being for cleaning, detoxifying and cells and tissues preservation of a fresh animal liver, **characterized in that** comprises the following steps:
S1: taking out a whole fresh liver from an animal body quickly and removing gallbladder, with blood vessels in first porta hepatis of the liver being retained when taking out the liver;
S2: spreading the liver taken out gently on a clean plane, dissecting the first porta hepatis of the liver quickly and determining portal vein, biliary tract, hepatic artery and upper and lower ends of inferior vena cava, and inserting disinfected medical catheters into blood vessels of the portal vein, the biliary tract and blood vessels of the hepatic artery;
S3: perfusing a perfusate of 30°C-35°C into the catheters in the portal vein, the hepatic artery and the biliary tract, the perfusate fully flows into a hepatic sinusoid system through the portal vein and the hepatic artery and fully flows into a biliary system through the biliary tract;
wherein, in step S3, the perfusate is a solution of water and salt, and a ratio of the salt to the water is 8.5-9 grams of the salt per thousand milliliters of the water;
S4: perfusing the perfusate continuously, macrophages and immune cells containing toxins, blood and harmful substances in the liver are eliminated from the upper and lower ends of the inferior vena cava continuously and bile is flushed out from the biliary tract system;
S5: perfusing continuously, until the fresh liver becomes white from blood red, and (a) then taking down the catheters from the portal vein, the biliary tract and the hepatic artery of the liver to complete the vascular perfusion cleaning, detoxification and cells and tissues preservation of the liver or (b) the vascular perfusion cleaning, detoxification and cells and tissues preservation of the liver are completed when the fresh liver becomes white from blood red.

2. The method of claim 1, **characterized in that** a length of the blood vessels retained in the first porta hepatis is 3 cm to 4 cm.

3. The method of claim 1 or 2, **characterized in that**, in step S1, ensuring integrity of surface capsula of the liver taken out.

4. The method of any one of claims 1-3, **characterized in that**, in step S2, fixing joints where the blood vessels of the portal vein, the biliary tract and the blood vessels of the hepatic artery connect with the catheters.

5. The method of any one of claims 1-4, **characterized in that**, in step S3, a perfusion speed of the perfusate is 20-30 ml/s.

## Patentansprüche

1. Verfahren zum Erhalten eines Leber-Lebensmittelprodukts, wobei das Verfahren zur Reinigung, Entgiftung und Erhaltung von Zellen und Geweben einer frischen Tierleber ist, **dadurch gekennzeichnet, dass** es die folgenden Schritte umfasst:
S1: schnelles Entnehmen einer ganzen frischen Leber aus einem Tierkörper und Entfernen der Gallenblase, wobei Blutgefäße in der ersten Leberpforte der Leber beim Entnehmen der Leber zurückbehalten werden;
S2: vorsichtiges Ausbreiten der entnommenen Leber auf einer sauberen Fläche, schnelles Zerlegen der ersten Leberpforte der Leber und Bestimmen von Pfortader, Gallengang, Leberarterie und oberen und unteren Enden der unteren Hohlvene und Einsetzen von desinfizierten medizinischen Kathetern in Blutgefäße der Pfortader, den Gallengang und Blutgefäße der Leberarterie;
S3: Perfundieren eines Perfusats von 30 °C bis 35 °C in die Katheter in der Pfortader, der Leberarterie und dem Gallengang, das Perfusat fließt vollständig in ein hepatisches Sinusoidsystem durch die Pfortader und die Leberarterie und fließt vollständig in ein Gallengangsystem durch den Gallengang;
wobei das Perfusat in Schritt S3 eine Lösung von Wasser und Salz ist und ein Verhältnis des Salzes zum Wasser 8,5-9 Gramm des Salzes pro tausend Milliliter des Wassers ist;
S4: kontinuierliches Perfundieren des Perfusats, Makrophagen und Immunzellen, die Toxine, Blut und schädliche Substanzen in der Leber enthalten, werden kontinuierlich aus den oberen und unteren Enden der unteren Hohlvene beseitigt und Galle wird aus dem Gallengangsystem gespült;
S5: kontinuierliches Perfundieren, bis die frische Leber weiß von blutrot wird und (a) dann Abnehmen der Katheter von der Pfortader, dem Gallengang und der Leberarterie der Leber, um die Gefäßperfusionsreinigung, Entgiftung und Erhaltung von Zellen und Geweben der Leber abzuschließen, oder (b) die Gefäßperfusionsreinigung, Entgiftung und Erhaltung von Zellen und Geweben der Leber abgeschlossen sind, wenn die frische Leber weiß von blutrot wird.

2. Verfahren nach Anspruch 1, **dadurch gekennzeichnet, dass** eine Länge der Blutgefäße, die in der ersten Leberpforte zurückbehalten werden, 3 cm bis 4 cm ist.

3. Verfahren nach Anspruch 1 oder 2, **gekennzeichnet durch** in Schritt S1 Gewährleisten der Unversehrtheit der Oberflächenkapsel der entnommenen Leber.

4. Verfahren nach einem der Ansprüche 1 bis 3, **gekennzeichnet durch** in Schritt S2 Fixieren von Verbindungen, wo sich die Blutgefäße der Pfortader, der Gallengang und die Blutgefäße der Leberarterie mit den Kathetern verbinden.

5. Verfahren nach einem der Ansprüche 1 bis 4, **dadurch gekennzeichnet, dass** in Schritt S3 eine Perfusionsgeschwindigkeit des Perfusats 20-30 ml/s ist.

## Revendications

1. Procédé d'obtention d'un produit alimentaire à base de foie, le procédé étant destiné au nettoyage, à la détoxification et à la préservation des cellules et tissus d'un foie d'animal frais, **caractérisé en ce qu'**il comprend les étapes suivantes :
S1 : prélever rapidement un foie frais entier sur le corps d'un animal et retirer la vésicule biliaire, les vaisseaux sanguins dans la première porte hépatique du foie étant conservés lors du prélèvement du foie ;
S2 : disposer le foie prélevé avec soin sur une surface propre, disséquer rapidement la première porte hépatique du foie et déterminer la veine porte, les voies biliaires et les vaisseaux sanguins de l'artère hépatique ;
S3 : perfuser un perfusat de 30 °C à 35 °C dans les cathéters dans la veine porte, l'artère hépatique et les voies biliaires, le perfusat s'écoulant entièrement dans un système sinusoïdal hépatique par le biais de la veine porte et l'artère hépatique et s'écoulant entièrement dans un système biliaire par le biais des voies biliaires ;
dans lequel, à l'étape S3, le perfusat est une solution d'eau et de sel, et un rapport entre le sel et l'eau est de 8,5 à 9 grammes de sel pour mille millilitres d'eau ;
S4 : perfuser le perfusat en continu, les macrophages et cellules immunitaires contenant des toxines, du sang et des substances nocives dans le foie étant éliminés en continu à partir des extrémités supérieure et inférieure de la veine cave inférieure et la bile étant évacuée par rinçage hors du système de voies biliaires ;
S5 : perfuser en continu, jusqu'à ce que le foie frais passe de rouge sang à blanc, et (a) enlever les cathéters de la veine porte, des voies biliaires et de l'artère hépatique du foie pour achever le nettoyage, la détoxification et la préservation de cellules et tissus du foie par perfusion vasculaire ou (b) le nettoyage, la détoxification et la préservation de cellules et tissus du foie par perfusion vasculaire sont achevées lorsque le foie frais passe de rouge sang à blanc.

2. Procédé selon la revendication 1, **caractérisé en ce qu'**une longueur des vaisseaux sanguins dans la première porte hépatique est de 3 cm à 4 cm.

3. Procédé selon la revendication 1 ou 2, **caractérisé en ce qu'**à l'étape S1, l'intégrité de la capsule de surface du foie prélevé est assurée.

4. Procédé selon l'une quelconque des revendications 1 à 3, **caractérisé en ce qu'**à l'étape S2, des joints sont fixés là où les vaisseaux sanguins de la veine porte, les voies biliaires et les vaisseaux sanguins de l'artère hépatique sont reliés aux cathéters.

5. Procédé selon l'une quelconque des revendications 1 à 4, **caractérisé en ce qu'**à l'étape S3, une vitesse de perfusion du perfusat est de 20 à 30 ml/s.
